# EUROPÄISCHE PATENTSCHRIFT

(11) **EP 0 570 661 B1**
(45) Veröffentlichungstag und Bekanntmachung des Hinweises auf die Patenterteilung: **19.03.1997**
(21) Anmeldenummer: 93100759.5
(22) Anmeldetag: 20.01.1993
(51) Int. Cl.: F16H 59/02, B60K 20/02

(54) **Schalthebel**
Gearshift lever
Commande de vitesse

(30) Priorität: 20.05.1992 DE 4216610
(43) Veröffentlichungstag der Anmeldung: 24.11.1993
(73) Patentinhaber: Firma Carl Freudenberg, D-69469 Weinheim (DE)
(72) Erfinder: Schütz, Michael, W-6149 Rimbach (DE); Bade, Karl Heinz, W-6942 Mörlenbach (DE); Reinemuth, Otto, W-6940 Weinheim (DE)

(56) Entgegenhaltungen:
- EP-A- 0 472 828
- DE-A- 2 022 723
- DE-A- 3 714 142
- GB-A- 639 963
- PATENT ABSTRACTS OF JAPAN vol. 8, no. 55 (P-260)(1492) 13. März 1984
- PATENT ABSTRACTS OF JAPAN vol. 011, no. 67 (M-566)28. Februar 1987

## Beschreibung

Die Erfindung betrifft einen Schalthebel zur Verwendung in einem Kraftfahrzeug, umfassend ein mittels eines Kugelgelenks in der Karosserie des Kraftfahrzeugs gelagertes Schalthebelunterteil, das von einem hülsenartig ausgebildeten Gummikörper umschlossen ist sowie ein Schalthebeloberteil, das glockenförmig ausgebildet, über den Gummikörper gestülpt und mit dem Gummikörper verbunden ist, wobei der Gummikörper das Schalthebeloberteil im Bereich seiner beiden axialen Enden zumindest teilweise anliegend berührt.

Ein solcher Schalthebel ist aus der JP-A-58 203 529 bekannt. Der Schalthebel ist derart ausgebildet, daß eine schwingungstechnische Abstimmung ermöglicht wird und sowohl Vibrationen als auch Luftschallabstrahlungen isoliert bzw. abgebaut werden können. Der Gummikörper ist auf das Schalthebelunterteil vulkanisiert und weist außenumfangsseitig nutförmige Ausnehmungen auf, wobei der Gummikörper unter elastischer Vorspannung innerhalb des glockenförmigen Schalthebeloberteils angeordnet und diesem zumindest teilweise mit radialem Abstand benachbart zugeordnet ist.

Der Erfindung liegt die Aufgabe zugrunde, einen Schalthebel der eingangs genannten Art derart weiterzuentwickeln, daß bei guten Gebrauchseigenschaften eine vereinfachte Herstellbarkeit bedingt ist.

Diese Aufgabe wird erfindungsgemäß mit dem kennzeichnenden Merkmal von Anspruch 1 gelöst. Auf vorteilhafte Ausgestaltungen nehmen die Unteransprüche Bezug.

Zur Erzielung einer vereinfachten Herstellbarkeit bei gleichbleibend guten Gebrauchseigenschaften ist es vorgesehen, daß das Kugelgelenk unter Zwischenschaltung einer Gummischicht am Schalthebel festgelegt ist, wobei die Gummischicht und der Gummikörper entlang des Außenumfangs des Schalthebelunterteils einstückig ineinander übergehend ausgebildet sind. Zur Erzielung guter Gebrauchseigenschaften berührt der Gummikörper das Schalthebeloberteil im Bereich seiner beiden axialen Enden zumindest teilweise anliegend und zwar bevorzugt derart, daß der Gummikörper in zumindest einem axialen Teilbereich unter radialer Vorspannung zwischen dem Schalthebelunterteil und dem Schalthebeloberteil angeordnet ist. Hierbei ist von Vorteil, daß sich bei Betätigen des Schalthebeloberteils eine exakte Führung des Schalthebelunterteils ergibt und dadurch ein vergleichsweise exakteres und einfacheres Einlegen des gewünschten Ganges gegeben ist.

Gemäß einer vorteilhaften Ausgestaltung ist es vorgesehen, daß der Gummikörper zwischen seinen beiden axialen Enden an zumindest einer Stelle einen radialen Abstand von dem Schalthebeloberteil aufweist. Im Hinblick auf eine einfache Montage und eine einfache Befestigung des Schalthebeloberteils auf dem Gummikörper kann die Stelle des radialen Abstands mit einer Eintiefung versehen sein. Im montierten Zustand legt sich in die Eintiefung des Gummikörpers eine entsprechend geformte Eintiefung des Schalthebeloberteils, so daß eine zuverlässige Festlegung des Schalthebeloberteils bezogen auf das Schalthebelunterteil während einer langen Gebrauchsdauer gewährleistet ist.

Die Eintiefungen können rillenförmig gestaltet sein und in Abhängigkeit von den jeweiligen Gegebenheiten des Anwendungsfalls in dem Gummikörper angeordnet sein.

Nach einer Ausgestaltung ist es vorgesehen, daß sich die Rille in Umfangsrichtung des Gummikörpers erstreckt und jeweils einen Abstand von den axialen Enden aufweist. Eine Verlagerung des Schalthebeloberteils in axialer Richtung relativ zu dem Schalthebelunterteil kann dadurch zuverlässig vermieden werden. Der Gummikörper kann am Schalthebelunterteil anvulkanisiert sein und beispielsweise das Schalthebeloberteil durch eine formschlüssige Verbindung in Form einer Rille in seiner Position halten.

Nach einer anderen Ausgestaltung ist es vorgesehen, daß sich zumindest eine Rille parallel zur Achse des Schalthebeloberteils erstreckt. Verlagerungen des Schalthebeloberteils in bezug auf das Schalthebelunterteil in Umfangsrichtung können durch eine derartige formschlüssige Verbindung vermieden werden. Dies ist insbesondere dann von Vorteil, wenn die axiale Begrenzung des Schalthebeloberteils auf der dem Fahrzeuginnenraum zugewandten Seite die Form eines Gewindebolzens zur Befestigung eines Schaltknaufs aufweist. In den meisten Fällen weist der Schaltknauf auf der dem Schalthebel in axialer Richtung abgewandten Seite eine Kennzeichnung des Schaltschemas auf, das die unterschiedlichen Schaltebenen markiert. Zur sinnvollen Nutzung dieser Hilfe ist es allerdings notwendig, daß der Schaltknauf eine bestimmte Position zum Schalthebeloberteil einnimmt. Beim Aufschrauben des Schaltknaufs bildet die Rille im Gummikörper, die sich in Achsrichtung erstreckt und in der eine entsprechend geformte Rille des Schalthebeloberteils anliegt, ein Widerlager zur Befestigung.

Zur Festlegung der beiden Schalthebelteile zueinander sowohl in Achsrichtung als auch in Umfangsrichtung können mehrere Eintiefungen nach Art eines Musters über die Oberfläche des Gummikörpers verteilt sein. Die beispielsweise waffelartig gestalteten Muster können mit entsprechend gestalteten Mustern des Schalthebeloberteils in Eingriffe bringbar sein.

Nach einer anderen Ausgestaltung kann es vorgesehen sein, daß das Schalthebeloberteil durch eine Verklebung mit dem Gummikörper verbunden ist.

Nach einer weiteren Ausgestaltung kann das Schalthebeloberteil mit zumindest einem nach innen weisenden und in eine Hinterschneidung des Gummikörpers eingreifenden Ansatz versehen sein. Diese Ausgestaltung ist in wirtschaftlicher und fertigungstechnischer Hinsicht besonders vorteilhaft, da der Ansatz durch eine durch Kaltverformung erzeugt Einstülpung des Schalthebeloberteils gebildet sein kann. Der Ansatz kann die Achse des Schalthebeloberteils rotationssymmetrisch umschließen und mehrfach am Umfang vestemmt sein. Die anschließend in radialer Richtung nach innen weisenden, krallenförmigen Zungen vereinfachen eine Demontage des Schalthebeloberteils vom Schalthebelunterteil.

Die Verstemmung kann dadurch in besonders einfacher Weise wieder aufgebogen werden, was im Reparaturfall von hervorzuhebender Bedeutung ist.

Die Mantelfläche des Kugelgelenks ist unter Zwischenschaltung eines Gummikörpers am Schalthebelunterteil festgelegt. Das Schalthebeloberteil und das Kugelgelenk sind durch eine elastisch verformbare Gummischicht miteinander verbunden.

Der Gegenstand der vorliegenden Erfindung wir nachfolgend anhand von Ausführungsbeispielen weiter erläutert. Diese zeigen die zu berücksichtigenden Einzelkomponenten teilweise in schematischer Darstellung:

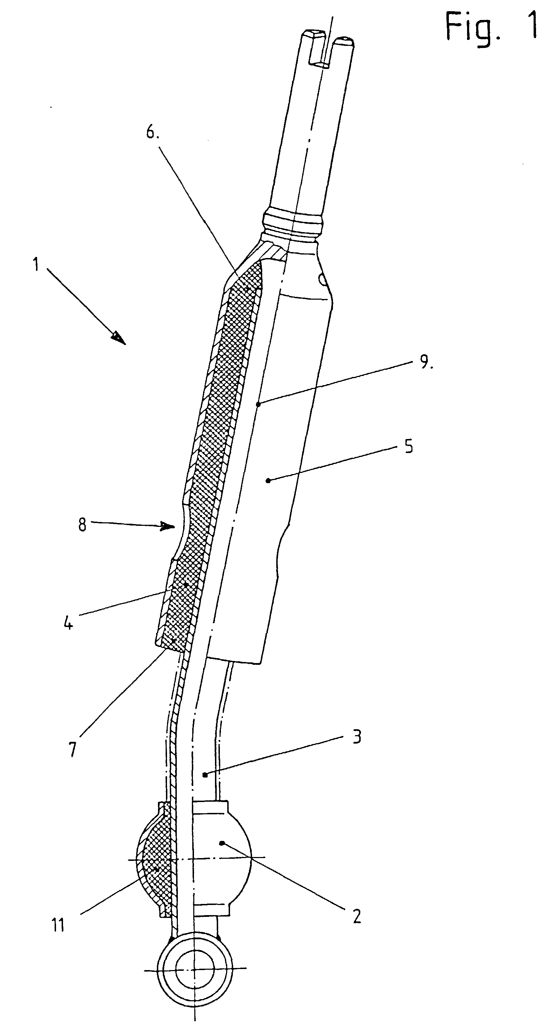

In den Figuren 1 bis 4 sind jeweils Ausführungsbeispiele von Schalthebeln dargestellt, die in Kraftfahrzeugen zur Anwendung gelangen. In Abhängigkeit von den jeweiligen Gegebenheiten des Anwendungsfalls wird das Schalthebeloberteil 5 durch Schwingungen des Motors und/oder des Getriebes angeregt. Die Erregerfrequenzen sind in verschiedenen Lastbereichen der Verbrennungskraftmaschine unterschiedlich groß, so daß der Gummikörper 4 daran jeweils angepaßt sein muß, um eine Anregung des Schalthebeloberteils 5 zu vermeiden bzw. klein zu halten.

In den Figuren 1 bis 4 sind Schalthebel 1 zur Verwendung in Kraftfahrzeugen dargestellt, die mit ihrem Kugelgelenk 2 in der Karosserie des Kraftfahrzeugs gelagert sind. Das Kugelgelenk 2 umschließt das Schalthebelunterteil 3, das seinerseits von einem Gummikörper 4 umfangsseitig umschlossen ist. Der Gummikörper 4 kann beispielsweise durch Vulkanisation an dem Schalthebelunterteil 3 festgelegt sein, ebenso wie eine Gummischicht 11, die radial zwischen dem Schalthebelunterteil und der kugelförmigen Hülse des Kugelgelenks angeordnet ist. Die Gummischicht 11 und der Gummikörper 4 sind entlang des Außenumfangs des Schalthebelunterteils 3 einstückig ineinander übergehend ausgebildet. Um den Gummikörper 4 ist ein glockenförmiges Schalthebeloberteil 5 gestülpt, wobei das Schalthebeloberteil 5 durch eine kraft- und/oder formschlüssige Verbindung mit dem Gummikörper 4 verbunden sein kann. Im Sinne einer guten Führung des Schalthebels ist der Gummikörper 4 derart zwischen dem Schalthebelunterteil 3 und dem Schalthebeloberteil 5 gehalten, daß der Gummikörper 4 das Schalthebeloberteil 5 im Bereich seiner beiden axialen Enden 6, 7 anliegend berührt.

In Figur 1 ist der Gummikörper 4 in einander gegenüberliegenden Teilbereichen 4 mit einer Eintiefung 8 versehen, in die nach dem Aufschieben des glockenförmigen Schalthebeloberteils 5 Eintiefungen desselben eingreifen und dadurch eine formschlüssige Verbindung gewährleisten.

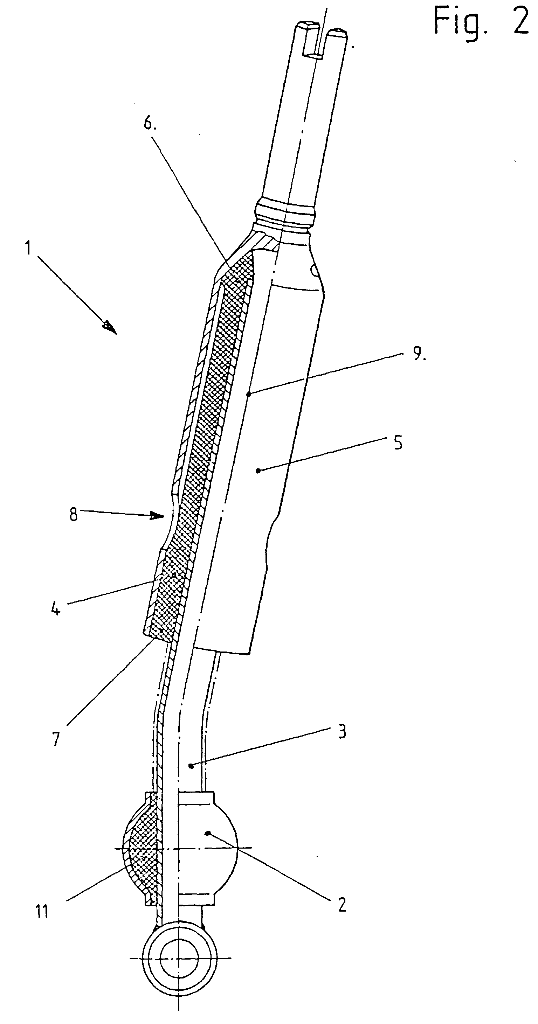

In Figur 2 ist ein Schalthebel 1 ähnlich dem Schalthebel aus Figur 1 dargestellt, wobei in axialer Richtung zwischen der Eintiefung 8 und dem axialen Ende 6 des Gummikörpers 4 eine in Richtung der Achse 9 verlaufende Rille vorgesehen ist. In Abhängigkeit von den zu dämpfenden Frequenzen können mehrere in Richtung der Achse 9 verlaufende Rillen entlang des Umfangs des Gummikörpers 4 angeordnet sein. Zur Dauerhaften Verbindung des Schalthebeloberteils 5 mit dem Gummikörper 4 können diese beiden Teile im Bereich ihrer Kontaktfläche miteinander verklebt sein. Eine im Vergleich zu dem Schalthebel 1 aus Figur 1 breitbandigere Schwingunsisolierung/-dämpfung ist durch den radialen Abstand gewährleistet.

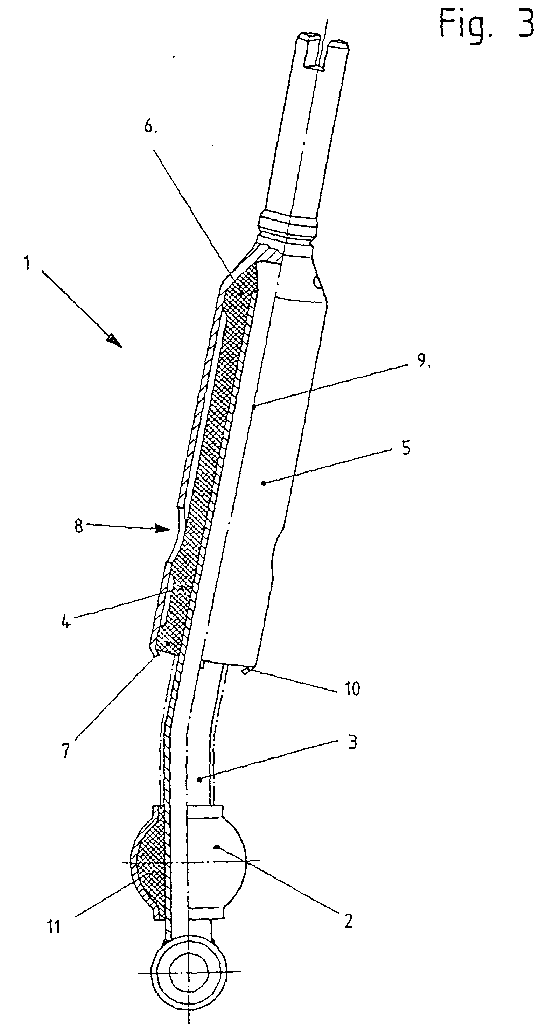

In Figur 3 ist als Sicherung gegen eine axiale und in Umfangsrichtung gerichtete Verschiebung des Schalthebeloberteils 5 gegenüber des Gummikörpers 4 ein den Gummikörper 4 hinterschneidender Absatz 10 vorgesehen. Der Absatz 10 kann Durchbrechungen aufweisen, so daß der Gummikörper 4 durch Haltenasen hintergriffen ist. In diesem Beispiel gelangen vier Haltenasen, die gleichmäßig über den Umfang des Schalthebeloberteils 5 verteilt sind, zur Anwendung. In Figur 3 sind die Rillen im Gegensatz zu Figur 2 umfangsseitig umlaufend angeordnet.

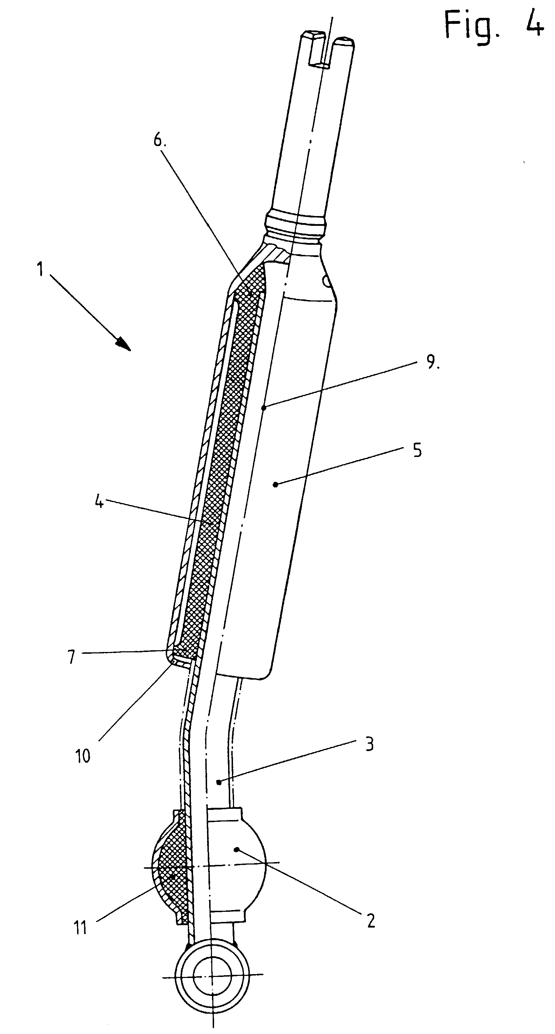

Der Schalthebel 1 aus Figur 4 zeichnet sich durch eine besonders einfache Herstellbarkeit aus. Er ist dadurch in wirtschaftlicher Hinsicht besonders günstig. Der Gummikörper 4 liegt nur im Bereich seiner beiden axialen Enden sowohl am Schalthebeloberteil 5 als auch am Schalthebelunterteil 3 an und weist im axialen Bereich zwischen den Enden 6, 7 entlang des gesamten Umfangs einen radialen Abstand zum Schalthebeloberteil 5 auf.

Das Schalthebeloberteil 5 kann Varianten zur Befestigung eines Schaltknaufes aufweisen, die von dem hier dargestellten Beispiel abweichen.

Neben einer guten Schwingungsdämpfung motor- und/oder getriebe- erregter Schwingungen zeichnet sich der erfindungsgemäße Schalthebel durch eine ausgezeichnete Führung von Schalthebeloberteil 5 auf Schalthebelunterteil 3 aus, so daß ein besonders exaktes Schalten des Getriebes ermöglicht wird.

## Patentansprüche

1. Schalthebel (1) zur Verwendung in einem Kraftfahrzeug, umfassend ein mittels eines Kugelgelenks (2) in der Karosserie des Kraftfahrzeugs gelagertes Schalthebelunterteil (3), das von einem hülsenartig ausgebildeten Gummikörper (4) umschlossen ist sowie ein Schalthebeloberteil (5), das glockenförmig ausgebildet, über den Gummikörper (4) gestülpt und mit dem Gummikörper (4) verbunden ist, wobei der Gummikörper (4) das Schalthebeloberteil (5) im Bereich seiner beiden axialen Enden (6, 7) zumindest teilweise anliegend berührt, dadurch gekennzeichnet, daß das Kugelgelenk (2) unter Zwischenschaltung einer Gummischicht (11) am Schalthebelunterteil (3) festgelegt ist und daß die Gummischicht (11) und der Gummikörper (4) entlang des Außenumfangs des Schalthebelunterteils (3) einstückig ineinander übergehend ausgebildet sind.

2. Schalthebel nach Anspruch 1, dadurch gekennzeichnet, daß der Gummikörper (4) zwischen seinen Enden (6, 7) an zumindest einer Stelle einen radialen Abstand von dem Schalthebeloberteil (5) aufweist.

3. Schalthebel nach Anspruch 1 bis 2, dadurch gekennzeichnet, daß der Gummikörper (4) an der Stelle mit einer Eintiefung (8) versehen ist.

4. Schalthebel nach Anspruch 3, dadurch gekennzeichnet, daß zumindest eine Eintiefung (8) vorgesehen ist, die die Gestalt einer Rille aufweist.

5. Schalthebel nach Anspruch 4, dadurch gekennzeichnet, daß zumindest eine Rille vorgesehen ist, die sich in Umfangsrichtung des Gummikörpers (4) erstreckt und einen Abstand von den Enden (6, 7) aufweist.

6. Schalthebel nach Anspruch 4 bis 5, dadurch gekennzeichnet, daß zumindest eine Rille vorgesehen ist, die sich parallel zu der Achse (9) des Schalthebeloberteils (5) erstreckt.

7. Schalthebel nach Anspruch 4 bis 6, dadurch gekennzeichnet, daß die Rille zumindest an einem Ende (6, 7) offen ist.

8. Schalthebel nach Anspruch 1 bis 7, dadurch gekennzeichnet, daß mehrere Eintiefungen (8.1, 8.2, ...) nach Art eines Musters über die Oberfläche des Gummikörpers (4) verteilt sind.

9. Schalthebel nach Anspruch 8, dadurch gekennzeichnet, daß das Muster waffelartig gestaltet ist.

10. Schalthebel nach Anspruch 1 bis 9, dadurch gekennzeichnet, daß das Schalthebeloberteil (5) durch eine Verklebung mit dem Gummikörper (4) verbunden ist.

11. Schalthebel nach Anspruch 1 bis 10, dadurch gekennzeichnet, daß das Schalthebeloberteil (5) mit zumindest einem nach innen weisenden und in eine Hinterschneidung des Gummikörpers (4) eingreifenden Ansatz (10) versehen ist.

12. Schalthebel nach Anspruch 11, dadurch gekennzeichnet, daß der Ansatz (10) durch eine durch Kaltverformung erzeugte Einstülpung des Schalthebeloberteils (5) gebildet ist.

13. Schalthebel nach Anspruch 11 bis 12 dadurch gekennzeichnet, daß der Ansatz (10) die Achse (9) des Schalthebeloberteils (5) rotationssymmetrisch umschließt.

## Claims

1. A gearshift lever (1) for use in a motor vehicle, comprising a gearshift lever bottom part (3), which is mounted in the body of the motor vehicle by means of a ball joint (2) and is surrounded by a rubber body (4) of sleeve-like design, and a gearshift lever top part (5), which is of bell-shaped design, is placed over the rubber body (4) and is connected to the rubber body (4), the rubber body (4) resting against the gearshift lever top part (5) in the region of its two axial ends (6, 7) in such a way as to rest against it at least in part, characterized in that the ball joint (2) is fixed on the gearshift lever bottom part (3) with the interposition of a rubber layer (11) and in that the rubber layer (11) and the rubber body (4) are designed to merge integrally into one another along the outer circumference of the gearshift lever bottom part (3).

2. A gearshift lever according to claim 1, characterized in that the rubber body (4) has a radial clearance from the gearshift lever top part (5) at at least one point between its ends (6, 7).

3. A gearshift lever according to either of claims 1 and 2, characterized in that the rubber body (4) is provided at the said point with a recess (8).

4. A gearshift lever according to claim 3, characterized in that at least one recess (8), which takes the form of a groove, is provided.

5. A gearshift lever according to claim 4, characterized in that at least one groove is provided, extending in the circumferential direction of the rubber body (4) and maintaining a clearance from the ends (6, 7).

6. A gearshift lever according to either of claims 4 and 5, characterized in that at least one groove, which extends parallel to the axis (9) of the gearshift lever top part (5), is provided.

7. A gearshift lever according to any of claims 4 to 6, characterized in that the groove is open at at least one end (6, 7).

8. A gearshift lever according to any of claims 1 to 7, characterized in that a plurality of recesses (8.1, 8.2, ...) is distributed in the form of a pattern over the surface of the rubber body (4).

9. A gearshift lever according to claim 8, characterized in that the pattern is of waffle-like configuration.

10. A gearshift lever according to any of claims 1 to 9, characterized in that the gearshift lever top part (5) is connected to the rubber body (4) by an adhesive bond.

11. A gearshift lever according to any of claims 1 to 10, characterized in that the gearshift lever top part (5) is provided with at least one inward-pointing shoulder (10) which engages in an undercut in the rubber body (4).

12. A gearshift lever according to claim 11, characterized in that the shoulder (10) is formed by an inward-turned portion, produced by cold deformation, of the gearshift lever top part (5).

13. A gearshift lever according to either of claims 11 and 12, characterized in that the shoulder (10) surrounds the axis (9) of the gearshift lever top part (5) in rotationally symmetrical fashion.

## Revendications

1. Levier de vitesse (1) pour utilisation dans un véhicule, comprenant une partie inférieure (3) de levier de vitesse logée dans la carrosserie du véhicule à l'aide d'un joint à rotule (2), qui est entourée d'un corps (4) en caoutchouc conçu comme un manchon ainsi qu'une partie supérieure (5) de levier de vitesse, qui est conçue en forme de cloche, enfoncée sur le corps (4) en caoutchouc et est reliée au corps (4) en caoutchouc, le corps (4) en caoutchouc touchant de façon au moins partiellement adjacente la partie supérieure (5) du levier de vitesse dans la zone de ses deux extrémités axiales (6, 7), caractérisé en ce que le joint à rotule (2) est fixé à la partie inférieure (3) du levier de vitesse par intercalage d'une couche (11) de caoutchouc et en ce que la couche (11) de caoutchouc et le corps (4) en caoutchouc sont conçus d'une seule pièce en passant l'un dans l'autre le long du pourtour extérieur de la partie inférieure (3) du levier de vitesse.

2. Levier de vitesse selon la revendication 1, caractérisé en ce que le corps (4) en caoutchouc présente entre ses extrémités (6, 7) à au moins un endroit, un écartement radial de la partie supérieure (5) du levier de vitesse.

3. Levier de vitesse selon les revendications 1 à 2, caractérisé en ce que le corps (4) en caoutchouc est muni d'un creux (8) audit endroit.

4. Levier de vitesse selon la revendication 3, caractérisé en ce que au moins un creux (8) est prévu, qui présente la configuration d'une gorge.

5. Levier de vitesse selon la revendication 4, caractérisé en ce que au moins une gorge est prévue, qui s'étend dans le sens périphérique du corps (4) en caoutchouc et présente un écartement des extrémités (6, 7).

6. Levier de vitesse selon les revendications 4 à 5, caractérisé en ce que au moins une gorge est prévue, qui s'étend parallèlement à l'axe (9) de la partie supérieure (5) du levier de vitesse.

7. Levier de vitesse selon les revendications 4 à 6, caractérisé en ce que la gorge est ouverte au moins à une extrémité (6, 7).

8. Levier de vitesse selon les revendications 1 à 7, caractérisé en ce que plusieurs creux (8.1, 8.2, ...) sont répartis à la manière d'un dessin sur la superficie du corps (4) en caoutchouc.

9. Levier de vitesse selon la revendication 8, caractérisé en ce que le dessin a une configuration de type gaufré.

10. Levier de vitesse selon les revendications 1 à 9, caractérisé en ce que la partie supérieure (5) du levier de vitesse (5) est reliée au corps (4) en caoutchouc par un collage.

11. Levier de vitesse selon les revendications 1 à 10, caractérisé en ce que la partie supérieure (5) du levier de vitesse est munie d'au moins une saillie (10) dirigée vers l'intérieur et engrenant dans une contre-dépouille du corps (4) en caoutchouc.

12. Levier de vitesse selon la revendication 11, caractérisé en ce que la saillie (10) est formée par un retournement, produit par matriçage à froid, de la partie supérieure (5) du levier de vitesse.

13. Levier de vitesse selon les revendications 11 à 12, caractérisé en ce que la saillie (10) entoure à symétrie de révolution l'axe (9) de la partie supérieure (5) du levier de vitesse
